# EUROPEAN PATENT APPLICATION

(11) **EP 2 722 305 A1**
(43) Date of publication of application: **23.04.2014**
(21) Application number: 13188547.7
(22) Date of filing: 14.10.2013
(51) Int. Cl.: C01B 3/26, H01M 8/06, H01M 8/10, H01M 4/90, H01M 4/88

(54) **Fuel cell stack device and manufacturing method for membrane electrode assembly**

(30) Priority: 17.10.2012 TW 101138185
(71) Applicant: Chung Hsin Electric & Machinery Mfg. Corp., Taoyuan Hsien (TW); China University of Geosciences (Wu Han ), Hongshan District Wuhan Hubei 430074 (CN)
(72) Inventor: Zhang, Ruiming, Taoyuan Hsien (TW); Cheng, Hansong, Taoyuan Hsien (TW); Chen, Meng-Yi, Taoyuan Hsien (TW); Gang, Ni, Taoyuan Hsien (TW)
(74) Representative: Fuchs

(57) **Abstract**

A fuel cell stack device includes a proton exchange membrane, an anode unit, and organic liquid hydrogen fuel. The anode unit including molybdenum oxide is disposed on the proton exchange membrane. The organic liquid hydrogen fuel flows through the anode unit and reacts with the anode unit to form protons.

## Description

### CROSS-REFERENCE TO RELATED APPLICATIONS

This Application claims priority of Taiwan Patent Application No. 101138185, filed on Oct. 17, 2012, the entirety of which is incorporated by reference herein.

### BACKGROUND OF THE INVENTION

### Field of the Invention

The present invention relates to a cell device, and in particular, to a fuel cell stack device.

### Description of the Related Art

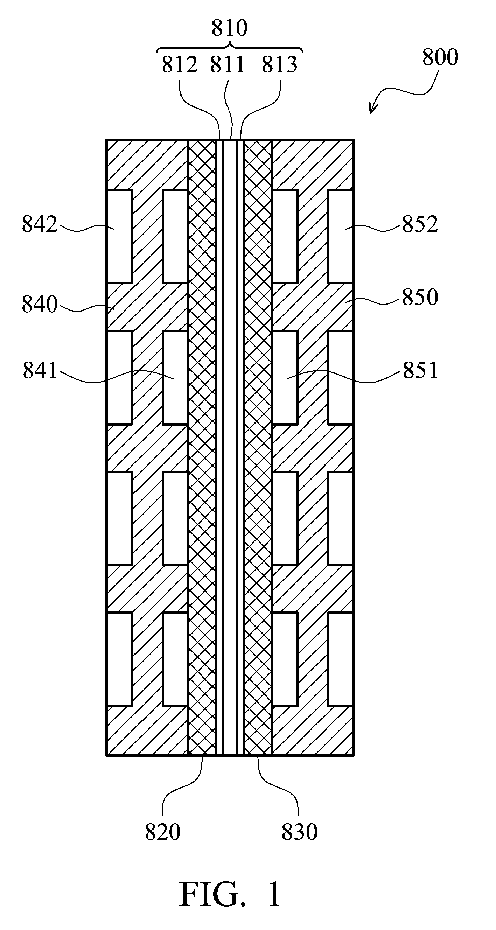

Fig. 1 is a cross-sectional view of a conventional fuel cell device 800 with a proton exchange membrane (PEM). As shown in Fig. 1, the fuel cell device 800 is a single cell including a membrane electrode assembly 810, two gas diffusion layers 820 and 830, and two bipolar plates 840 and 850. As shown in Fig. 1, the membrane electrode assembly 810 is located between the gas diffusion layers 820 and 830, and the bipolar plates 840 and 850 are disposed on the two opposite sides of the gas diffusion layers 820 and 830. The bipolar plates 840 and 850 have a plurality of reaction channels 841 and 851, respectively. The hydrogen is utilized as fuel, and the oxygen is utilized as an oxidant in the conventional fuel cell device 800. The hydrogen flows through the reaction channel 841, and the oxygen flows through the reaction channel 851.

The membrane electrode assembly 810 includes a proton exchange membrane 811, an anode catalyst layer 812, and a cathode catalyst layer 813. The anode catalyst layer 812 and the cathode catalyst layer 813, including platinum, carbon-supported platinum alloy, or platinum alloy, are catalysts to improve the electrochemical reaction of the fuel cell device 800. However, since the cost of platinum or platinum alloy is expensive, the manufacturing cost of the fuel cell device 800 is very high. Moreover, since the fuel is gas, the reaction rate of the fuel and the catalyst layer is slower, and thus the efficiency of the fuel cell device 800 is lower.

Moreover, for cooling the heat generated by the reaction of the fuel and the anode catalyst layer 812, the bipolar plates 840 and 850 further include cooling channels 842 and 852 for cooling water to pass through. This increases the volume and weight of the fuel cell device 800.

### BRIEF SUMMARY OF THE INVENTION

To solve the problems of the prior art, the present disclosure provides a fuel cell stack device with lighter weight, smaller volume, and higher efficiency, and the manufacturing cost of the fuel cell stack device is decreased.

The present disclosure provides a fuel cell stack device including a proton exchange membrane, an anode unit, and organic liquid hydrogen fuel. The anode unit is disposed on the proton exchange membrane. The organic liquid hydrogen fuel flows through the anode unit, and reacts with the anode unit. The anode unit includes molybdenum oxide, and a hydrogen molybdenum bronze is generated by the reaction of the molybdenum oxide and the organic liquid hydrogen fuel.

The present disclosure provides a manufacturing method for the membrane electrode assembly including following steps: providing an anode unit including molybdenum oxide; putting a ring pad on the anode unit; pouring a resin solution with perfluorosulfonic acid in the ring pad; and drying the resin solution with perfluorosulfonic acid on the anode unit to form a proton exchange membrane on the surface of the anode unit.

The present disclosure also provides a manufacturing method for the membrane electrode assembly including the following steps: putting a proton exchange membrane on the base of a pressing mold; covering the proton exchange membrane with a powder comprising molybdenum oxide; pressing the pressing element of the pressing mold on the powder and the proton exchange membrane with heat; and forming an anode unit of the powder after the powder is solidified.

In conclusion, the anode unit of the present disclosure is made by molybdenum oxide at a lower cost, and thus the manufacturing cost is decreased. Moreover, since the organic liquid hydrogen fuel is utilized by the fuel cell stack device, the reaction of the fuel and the anode unit is increased. Next, since the fuel is liquid, the heat generated by the electrochemical reaction of the fuel, the anode unit, and the cathode unit is quickly dissipated by the fuel. The cooling channels and the cooling water are not needed by the fuel cell stack device, and thus the volume and the weight of the fuel cell stack device are decreased.

### BRIEF DESCRIPTION OF THE DRAWINGS

The invention can be more fully understood by reading the subsequent detailed description and examples with references made to the accompanying drawings, wherein:

Fig. 1 is a cross-sectional view of a conventional fuel cell device with a proton exchange membrane (PEM);

Fig. 2 is a function block diagram of a fuel cell system according to the present disclosure;

Fig. 3 is a perspective view of the fuel cell stack device according to the present disclosure;

Fig. 4 is an exploded view of the fuel cell stack device according to the present disclosure;

Fig. 5 is a cross-sectional view of the fuel cell stack device according to the present disclosure;

Fig. 6 is a cross-sectional view of a first fuel cell element according another embodiment of the present disclosure;

Fig. 7 is a flow chart of the membrane electrode assembly according to a first embodiment of the present disclosure;

Fig. 8 is a schematic view of a pressing mold according to the present disclosure; and

Fig. 9 is a flow chart of the manufacturing method for the membrane electrode assembly according a second embodiment of the present disclosure.

### DETAILED DESCRIPTION OF THE INVENTION

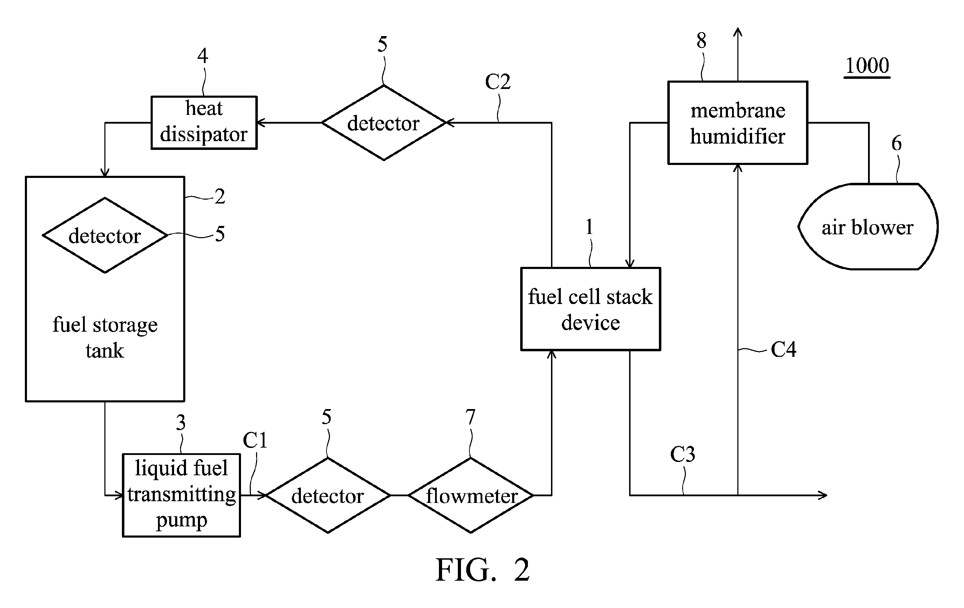

Fig. 2 is a function block diagram of a fuel cell system 1000 according to the present disclosure. The fuel cell system 1000 includes a fuel cell stack device 1, a fuel storage tank 2, a liquid fuel transmitting pump 3, a heat dissipator 4, a plurality of detectors 5, an air blower 6, a flowmeter 7, and a membrane humidifier 8. The fuel cell stack device 1 generates electric power by the reaction of the organic liquid hydrogen fuel and the oxidant. The fuel storage tank 2 is to store the organic liquid hydrogen fuel, and the fuel storage tank 2 couples with the fuel cell stack device 1 via a first pipe C1 and a second pipe C2. In the embodiment, the organic liquid hydrogen fuel includes cyclic organic compound, and the oxidant may be air or oxygen.

The fuel storage tank 2, the first pipe C1, the fuel cell stack device 1, and the second pipe C2 are formed as a loop. The organic liquid hydrogen fuel cycles between the fuel storage tank 2 and the fuel cell stack device 1. Namely, the organic liquid hydrogen fuel is transmitted to the fuel cell stack device 1 via the first pipe C1, and the organic liquid hydrogen fuel in the fuel cell stack device 1 is C2 transmitted to the fuel storage tank 2 via the second pipe C2.

The liquid fuel transmitting pump 3 is disposed on the first pipe C1 to draw the organic liquid hydrogen fuel from the fuel storage tank 2, and transmits the organic liquid hydrogen fuel to the fuel cell stack device 1. The heat dissipator 4 is disposed on the second pipe C2 to dissipate the heat of the organic liquid hydrogen fuel within the second pipe C2. In another embodiment, the liquid fuel transmitting pump 3 may be disposed on the second pipe C2 or the fuel storage tank 2. The heat dissipator 4 is disposed on the fuel storage tank 2, or may be optional.

After the organic liquid hydrogen fuel reacts with the oxidant in the fuel cell stack device 1, the hydrogen content of the organic liquid hydrogen fuel is decreased. Thus, in the embodiment, the detectors 5 are utilized to detect the hydrogen content of the organic liquid hydrogen fuel to know the chemical energy of the fuel. When the hydrogen content of the organic liquid hydrogen fuel detected by the detector 5 is found lacking, the fuel storage tank 2 may be replaced, or the organic liquid hydrogen fuel in the fuel storage tank 2 may be replaced to raise the hydrogen content.

In the embodiment, the detectors 5 are disposed on the first pipe C1, the second pipe C2, and the fuel storage tank 2. The detector 5 disposed on the fuel storage tank 2 detects the hydrogen content of the organic liquid hydrogen fuel in the fuel storage tank 2. The detector 5 disposed on the first pipe C1 detects the hydrogen content of the organic liquid hydrogen fuel transmitted to the fuel cell stack device 1. The detector 5 disposed on the second pipe C2 detects the hydrogen content of the organic liquid hydrogen fuel exhausted from the fuel cell stack device 1.

In another embodiment, the organic liquid hydrogen fuel is exhausted from the fuel cell stack device 1 via the first pipe C1, and injected into the fuel cell stack device 1 via the second pipe C2. The detectors 5 disposed on the first pipe C1 and the second pipe C2 may detect the difference in the hydrogen content of the organic liquid hydrogen fuel before and after the reaction in the fuel cell stack device 1. Thus, the efficiency of the fuel cell stack device 1 may be estimated.

The flowmeter 7 is disposed on the first pipe C1 to detect the flow rate of the organic liquid hydrogen fuel being injected into the fuel cell stack device 1.

In the embodiment, the oxidant may be a gas of air, such as oxygen. The air blower 6 is used to draw the air, and the air is wetted by being passed through the membrane humidifier 8. Then, the wet air is transmitted to the fuel cell stack device 1. The membrane humidifier 8 is coupled to the fuel cell stack device 1 and the air blower 6. Since the air exhausted from the fuel cell stack device 1 is wet, the membrane of the membrane humidifier 8 may be wetted by injecting the air exhausted from the fuel cell stack device 1 via the pipe C3 and the pipe C4. Moreover, if the air exhausted from the fuel cell stack device 1 is too voluminous, the air may be exhausted from the pipe C3 or the membrane humidifier 8.

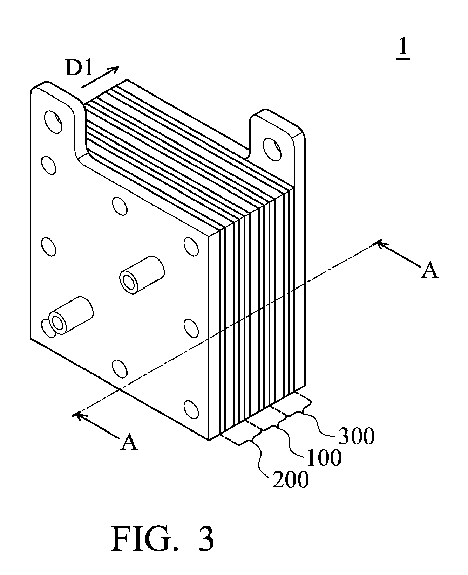

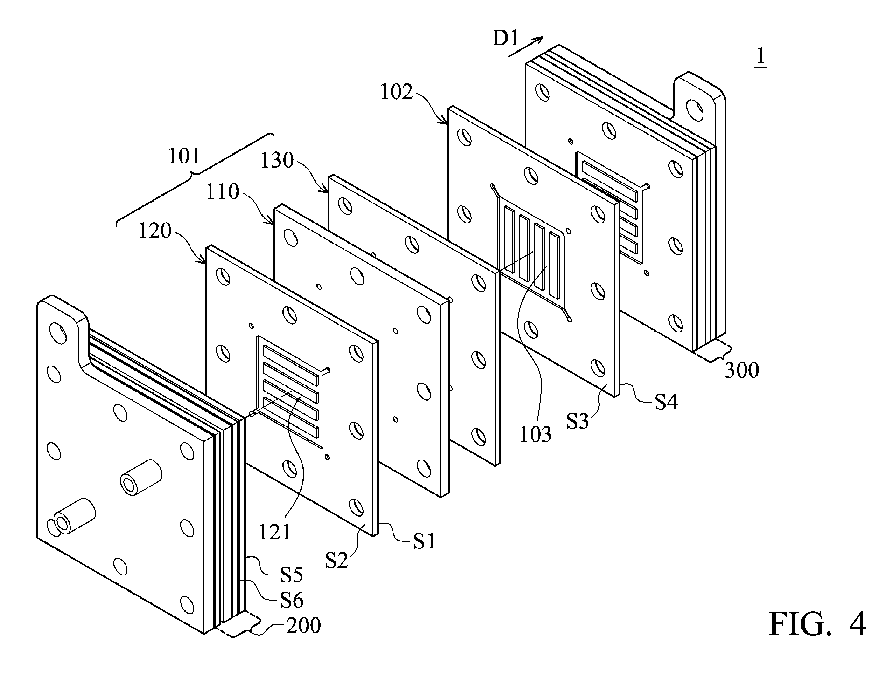

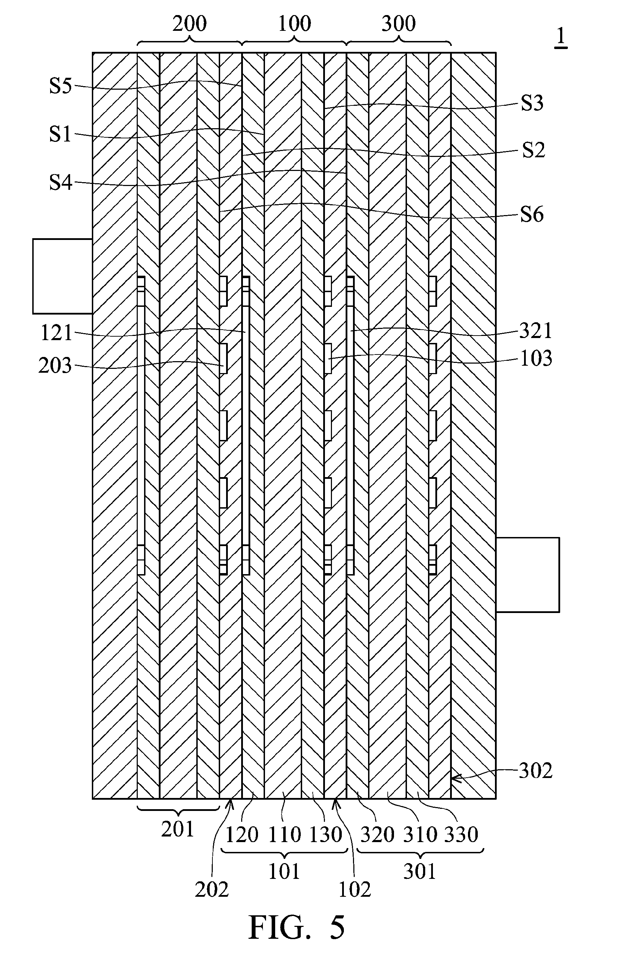

Fig. 3 is a perspective view of the fuel cell stack device 1 according to the present disclosure. Fig. 4 is an exploded view of the fuel cell stack device 1 according to the present disclosure. Fig. 5 is a cross-sectional view of the fuel cell stack device 1 according to the present disclosure. The fuel cell stack device 1 includes a plurality of fuel cell elements (a first fuel cell element 100, a second fuel cell element 200, and a third fuel cell element 300). The first fuel cell element 100, the second fuel cell element 200, and the third fuel cell element 300 have the same structure. The second fuel cell element 200, the first fuel cell element 100, and the third fuel cell element 300 are stacked along a stacking direction D1.

The first fuel cell element 100 includes a membrane electrode assembly 101 and a bipolar plate 102. The bipolar plate 102 is stacked on the membrane electrode assembly 101. The membrane electrode assembly 101 includes a proton exchange membrane 110, an anode unit 120, and a cathode unit 130.

The proton exchange membrane 110 is located between the anode unit 120 and the cathode unit 130. The proton exchange membrane 110 may be a perfluorosulfonic acid proton exchange membrane. In another embodiment, the proton exchange membrane 110 is a polybenzimidazole proton exchange membrane, and thermal tolerance. The temperature of thermal tolerance of the polybenzimidazole proton exchange membrane may be lower than 180 °C. Thus, the fuel cell stack device 1 may be operated in higher temperature due to the proton exchange membrane 110, and the efficiency of the fuel cell stack device 1 is raised.

The anode unit 120 is disposed on the proton exchange membrane 110. The anode unit 120 has a first surface S1, a second surface S2, and a plurality of channels 121. The first surface S1 contacts the proton exchange membrane 110, the second surface S2 is opposite to the first surface S1, and the channels 121 are disposed on the second surface S2. The organic liquid hydrogen fuel flows through the channels 121 of the anode unit 120. The first surface S1 may be a flat surface.

The anode unit 120 includes from 10 wt% to 99 wt% of molybdenum oxide. The molybdenum oxide may be MoO₃. In another embodiment, the anode unit 120 may further include tungsten oxide and/or vanadium oxide. By doping the tungsten oxide and/or vanadium oxide, the hydrogen ion (or proton) and electron conductivity of the anode unit 120 is increased.

In the embodiment, the anode unit 120 is made by molybdenum oxide at a lower cost, and thus the manufacturing cost is decreased.

The organic liquid hydrogen fuel may include cyclohexane, N-ethylcarbazole, or liquid unsaturated aromatic heterocyclic molecule. The molybdenum oxide has greater reaction with the described molecule of the organic liquid hydrogen fuel to make a hydrogen ion of the organic liquid hydrogen fuel and the molybdenum oxide to form the hydrogen molybdenum bronze. Since the hydrogen molybdenum bronze is a conductor, electrons may be transmitted to an outer circuit (not shown) via the hydrogen molybdenum bronze of the anode unit 120. Therefore, a liquid hydrogen organic compound may be utilized as fuel by the fuel cell stack device 1.

The liquid unsaturated aromatic heterocyclic molecule includes 1 to 20 aromatic cyclic molecules. Each of the aromatic cyclic molecules includes 4 to 10 carbon atoms. The aromatic cyclic molecule may be aromatic heterocyclic molecule. If the aromatic heterocyclic molecules includes many rings, all or some of the rings are heterorings.

For example, the organic liquid hydrogen fuel is cyclohexane (C₆H₁₂). The reaction equations of the fuel cell stack device 1 are described as follows.
Pre-reaction: MoO₃+C₆H₁₂→HₓMoO₃+C₆H₆
Anode reaction: HₓMoO₃→MoO₃+xH⁺+xe⁻
Cathode reaction: 4H⁺+O₂+4e⁻→2H₂O
Total reaction: 2C₆H₁₂ + 3O₂ → 2C₆H₆ + 6H₂O

First, in the pre-reaction, the hydrogen molybdenum bronze (HₓMoO₃) and benzene (C₆H₆) are formed from molybdenum oxide (MoO₃) and cyclohexane (C₆H₁₂), wherein the x of the HₓMoO₃ is 0.1 to 2. Specifically, the valence number of Mo of the Mo0₃ is +6. In the pre-reaction, H atoms are doped into the Mo0₃, and the valence number of Mo is decreased from 6 according to the number of the H atoms doped into the MoO₃. Thus, the valence number of the Mo can be an integer, or not. For example, when the H atoms are doped into the MoO₃, part or all of the valence number of Mo atoms are transformed to +4, and the valence number of the remaining Mo atoms is +6. Thus, the x has an average number ranging from 0.1 to 2, the hydrogen ion (or proton) and electron conductivity of the anode unit 120 may be controlled by adjusting the value of x. For example, in the embodiment, x may be 1, but is not limited thereto.

Moreover, in the pre-reaction, the cyclohexane (C₆H₁₂) may react with the hydrogen molybdenum bronze, such as the x of the HₓMoO₃ is 0.3 having a lower hydrogen content. Alternatively, the cyclohexane (C₆H₁₂) may react with the oxygen atom (O) on the surface of the MoO_{3.} The above two possible reactions would result in the C-H bond being broken. Then, the released hydrogen (H) atoms are added into the MoO₃ to form the hydrogen molybdenum bronze, having a higher hydrogen content, such as the x of the HₓMoO₃ being 1.8. In addition, the carbon (C) atoms of C₆H₁₂ are formed to C=C double bond gradually.

Next, the reaction product, the hydrogen molybdenum bronze having a higher hydrogen content in the pre-reaction may be transformed into the hydrogen molybdenum bronze having a lower hydrogen content, or MoO₃ in the anode reaction. In the anode reaction process, the cyclohexane processes a de-hydrogen reaction to form unsaturated cyclic hydrocarbons. In theory, the maximum dehydrogenation volume is 55g/Liter approaches 80% of the energy density of liquid hydrogen (liquid hydrogen is 70.8 g/Liter). According to the thermodynamic analysis, in the reaction condition of the reaction, the unsaturated cyclic hydrocarbons do not process the de-hydrogen process to form the CO₂ and water. Thus, the unsaturated cyclic hydrocarbons may be restored to cyclohexane by the hydrogenation reduction, and may be reused.

In practice, in the electrochemical reaction process of the fuel cell, the hydrogen molybdenum bronze of the anode unit 120 is to provide the hydrogen ion (proton), the hydrogen atom is separated from the cyclohexane continually, and thus hydrogen ions (protons) and electrons are formed. The released electron is transmitted to the cathode unit 330 via an outer circuit. The hydrogen ion (proton) is transmitted to the cathode unit 330 via the proton exchange membrane 110, and it reacts with the electron and the oxygen to form H₂O. Thus, the cathode reaction and the anode reaction may be continually processed.

In the described reactions, the hydrogen molybdenum bronze having a lower hydrogen content, MoO₃ and/or intermediate product (hydrogen molybdenum bronze having a higher hydrogen content) join the reaction as reactants, and also join the electrochemical reaction as an active compound in the anode process. Moreover, the hydrogen molybdenum bronze with great hydrogen ion (or proton) and electron conductivity is a medium to transmit the hydrogen atom.

In the embodiment, since the organic liquid hydrogen fuel flows to the anode unit 120 directly, the reaction rate may be increased, and a liquid diffusion layer may be disposed in the fuel cell stack device 1. Moreover, the efficiency of the fuel cell stack device 1 may be increased by the quick reaction rate between the liquid fuel and the anode unit 120.

The cathode unit 130 is a membrane structure disposed on the proton exchange membrane 110. The cathode unit 130 includes at least 90 wt% noble metal, such as platinum, platinum alloy, or carbon-supported platinum alloy.

The bipolar plate 102 is disposed on the cathode unit 130. The bipolar plate 102 has a third surface S3, a fourth surface S4, and a plurality of channels 103. The third surface S3 is disposed on the cathode unit 130, the fourth surface S4 is opposite to the third surface S3, and the channels 103 are disposed on the third surface S3. Thus, the cathode unit 130 is a sidewall of the channel 103. The oxidant flows through the channels 103, wherein the oxidant may be air or oxygen. Since the cathode unit 130 is disposed on the third surface S3, the oxygen is able to react with the cathode unit 130. The fourth surface S4 may be a flat surface.

The second fuel cell element 200 includes a membrane electrode assembly 201 and a bipolar plate 202. The bipolar plate 202 is located between the membrane electrode assembly 201 and the anode unit 120, and the anode unit 120 is located between the proton exchange membrane 110 and the bipolar plate 202.

The bipolar plate 202 has a fifth surface S5, a sixth surface S6, and a plurality of channels 203. The fifth surface S5 is disposed on the second surface S2, and thus the fifth surface S5 is a sidewall of the channel 121. The sixth surface S6 is opposite to the fifth surface S5. The channels 203 are disposed on the sixth surface S6, and the membrane electrode assembly 201 contacts the sixth surface S6. The oxidant flows through channel 203, and thus the oxidant contacts the membrane electrode assembly 201. The fifth surface S5 may be a flat surface.

Since the channels 121 of the anode unit 120 are covered by the bipolar plate 202 of the second fuel cell element 200, the fuel cell element 100 may include only one bipolar plate 102. Therefore, the volume and weight of the fuel cell stack device 1 are decreased.

The third fuel cell element 300 includes a membrane electrode assembly 301 and a bipolar plate 302. The membrane electrode assembly 301 is disposed on the fourth surface S4 of the bipolar plate 102, and is located between the bipolar plate 102 and the bipolar plate 302. The membrane electrode assembly 301 includes a proton exchange membrane 310, an anode unit 320, and a cathode unit 330. The anode unit 320 is disposed on the fourth surface S4 of the bipolar plate 102, and thus the fourth surface S4 is a sidewall of the channel 321 of the anode unit 320.

When the organic liquid hydrogen fuel reacts in the fuel cell stack device 1, the heat generated by the fuel cell stack device 1 may be transmitted to the bipolar plate 202. Since the organic liquid hydrogen fuel is liquid, and it flows through the bipolar plate 202 and the anode unit 120, the heat of the bipolar plate 202 and the anode unit 120 is easily dissipated by the organic liquid hydrogen fuel. Therefore, in the embodiment, it is not necessary to inject cooling water into the fuel cell stack device 1, and channels for cooling water do not need to be disposed on the bipolar plates 102 and 202. Therefore, the volume and weight of the fuel cell stack device are further decreased.

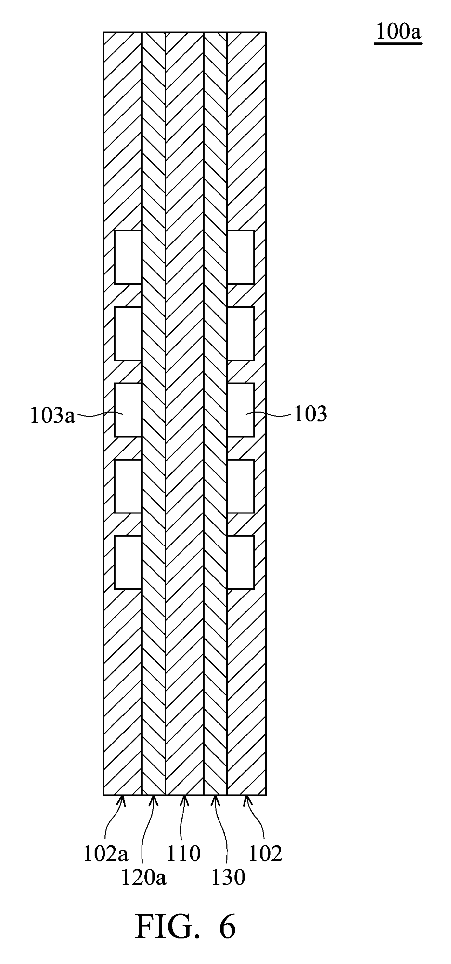

Fig. 6 is a cross-sectional view of a first fuel cell element 100a according another embodiment of the present disclosure. In the embodiment, the first fuel cell element 100a includes a bipolar plate 102 and a bipolar plate 102a, and the anode unit 120a is a membrane structure. The anode unit 120a covers the channels 103a of the bipolar plate 102a, and thus the organic liquid hydrogen fuel is able to flow through the channels 103a and the anode unit 120a.

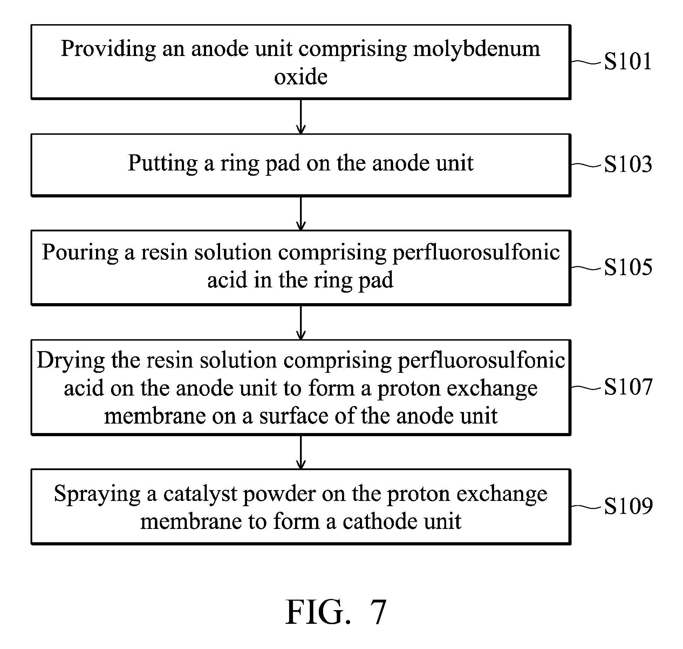

Fig. 7 is a flow chart of the membrane electrode assembly 101 according to a first embodiment of the present disclosure. The manufacturing method of the membrane electrode assembly 101 is described as follows. An anode unit 120 including molybdenum oxide is provided (step S101). The anode unit 120 may include channels 121. A ring pad is disposed on the anode unit 120 (step S103).

A resin solution with perfluorosulfonic acid is poured into the ring pad (step S105). After a predetermined time, the resin solution is dried on the anode unit 120 to form a proton exchange membrane 110 (step S107). A catalyst powder including platinum, platinum alloy, or carbon-supported platinum alloy is sprayed on the proton exchange membrane 110 to form a cathode unit 130 (step S109). In another embodiment, the resin solution includes polybenzimidazole, and the proton exchange membrane is a polybenzimidazole proton exchange membrane and has thermal tolerance.

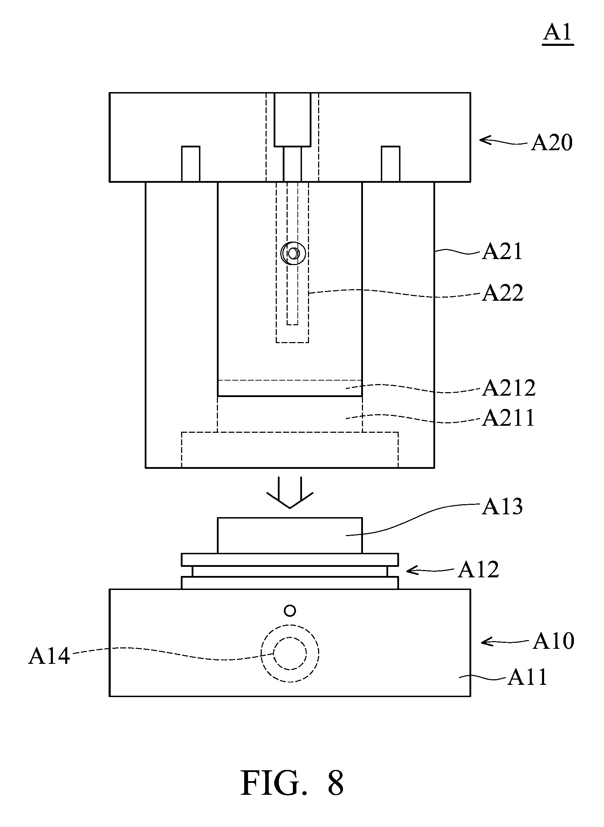

Fig. 8 is a schematic view of a pressing mold A1 according to the present disclosure. The pressing mold A1 includes a base A10 and a pressing element A20. The base A10 includes a base body A11, an O-ring A12, a pad A13 and a heating element A14. The O-ring A12 is disposed on the surface of the base body A11, and the pad A13 is disposed on the O-ring A12. The O-ring A12 is used to apply a buffering force on the pad A13. The heating element A14 is disposed in the base body A11, and serves to heat the base body A11.

The pressing element A20 includes a pressing body A21 and a heating element A22. The pressing body A21 has a receiving groove A211, and a heating element A22 is disposed in the pressing body A21 to heat the pressing body A21.

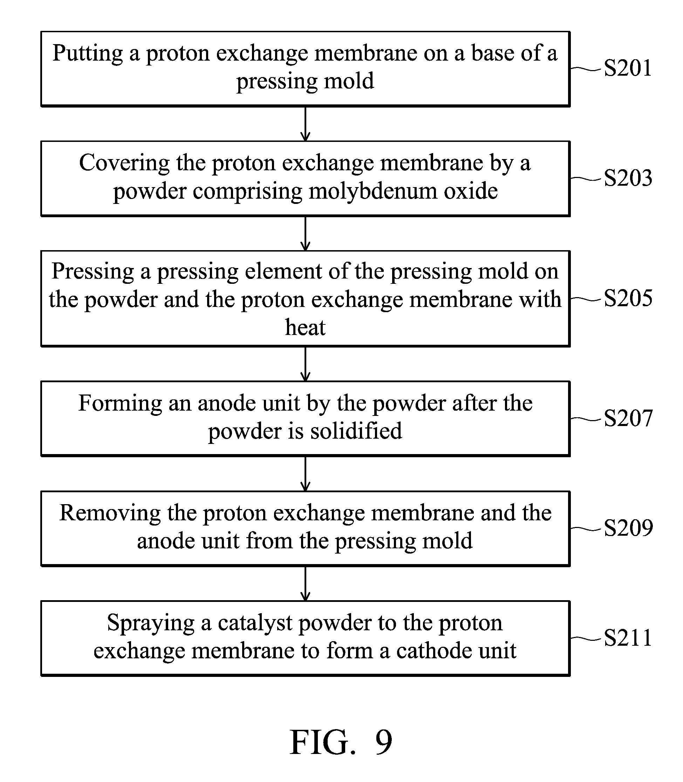

Fig. 9 is a flow chart of the manufacturing method for the membrane electrode assembly 101 according a second embodiment of the present disclosure. The manufacturing method for the membrane electrode assembly is described as follows. A proton exchange membrane 110 is disposed on the pad A13 of the base A10 (step S201). A powder including molybdenum oxide is filled in the pressing mold A1, covering the proton exchange membrane 110 (step S203).

The pressing element A20 of the pressing mold A1 is pressed on the base A10. The proton exchange membrane, the pad A13, and the O-ring A12 are received in the receiving groove A211, and the heating element A14 and A21 heats the powder and the proton exchange membrane via the base body A11 and the pressing body A21 to make the powder and the proton exchange membrane 110 pressed by the pressing mold A1 with heat (step S205).

In the embodiment, the receiving groove A211 includes a plurality of bumps A212. When the powder is pressed by the pressing mold A1 with heat, a plurality of grooves is formed on the powder.

After the powder is solidified, the powder forms an anode unit 120, and the grooves form the channels 121 of the anode unit 120 (step S207). The proton exchange membrane 110 and the anode unit 120 are removed from the pressing mold A1 (step S209). The catalyst powder including platinum, platinum alloy, or carbon-supported platinum alloy is sprayed on the proton exchange membrane 110 to form a cathode unit 130 (step S211).

In conclusion, the anode unit of the present disclosure is made by molybdenum oxide at a lower cost, and thus the manufacturing cost is decreased. Further, since the anode unit is made of molybdenum oxide, and the hydrogen molybdenum bronze formed by the catalytic action of the anode unit and the organic liquid hydrogen fuel is a greater conductor of protons and electrons, the protons and electrons may be separated from the organic liquid hydrogen fuel and directly transmitted to the cathode unit and an outer circuit.

Moreover, since the organic liquid hydrogen fuel is utilized by the fuel cell stack device, the reaction of the fuel and the anode unit is increased. Next, since the fuel is liquid, the heat generated by the electrochemical reaction of the fuel, the anode unit, and the cathode unit is quickly dissipated by the fuel. The cooling channels and the cooling water are not needed by the fuel cell stack device, and the volume and weight of the fuel cell stack device are decreased.

While the invention has been described by way of example and in terms of preferred embodiment, it is to be understood that the invention is not limited thereto. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A fuel cell stack device, comprising:
a proton exchange membrane;
an anode unit disposed on the proton exchange membrane; and
organic liquid hydrogen fuel, flowing through the anode unit, reacting with the anode unit;
wherein the anode unit comprises molybdenum oxide, and the molybdenum oxide reacts with the organic liquid hydrogen fuel to form hydrogen molybdenum bronze.

2. The fuel cell stack device as claimed in claim 1, wherein the hydrogen molybdenum bronze is HₓMoO₃, wherein the x is between 0.1 and 2.

3. The fuel cell stack device as claimed in claim 1 or 2, wherein the organic liquid hydrogen fuel comprises a cyclic organic compound.

4. The fuel cell stack device as claimed in one of claims 1 to 3, wherein the organic liquid hydrogen fuel is selected from the group consisting of cyclohexane, N-ethylcarbazole, liquid unsaturated aromatic heterocyclic molecule, and the compound thereof.

5. The fuel cell stack device as claimed in one or more of claims 1 to 4, wherein the organic liquid hydrogen fuel comprises a liquid unsaturated aromatic heterocyclic molecule comprising 1 to 20 aromatic cyclic molecules.

6. The fuel cell stack device as claimed in one or more of claims 1 to 5, wherein the anode unit is a membrane structure.

7. The fuel cell stack device as claimed in one or more of claims 1 to 6, wherein the anode unit comprises a first surface disposed on the proton exchange membrane, a second surface opposite to the first surface, and a plurality of channels disposed on the second surface.

8. The fuel cell stack device as claimed in one or more of claims 1 to 7, further comprising a first bipolar plate disposed on the anode unit.

9. The fuel cell stack device as claimed in claim 8, wherein the first bipolar plate has a fifth surface disposed on the second surface, a sixth surface opposite to the fifth surface, and a plurality of channels disposed on the sixth surface.

10. The fuel cell stack device as claimed in claim 9, further comprising an oxidant flowing through the channels on the sixth surface.

11. The fuel cell stack device as claimed in one or more of claims 1 to 10, wherein the proton exchange membrane is a perfluorosulfonic acid proton exchange membrane.

12. The fuel cell stack device as claimed in one or more of claims 1 to 11, wherein the proton exchange membrane is a polybenzimidazole proton exchange membrane and has thermal tolerance.

13. The fuel cell stack device as claimed in one or more of claims 1 to 12, further comprising a cathode unit disposed on the proton exchange membrane, wherein the proton exchange membrane is located between the anode unit and the cathode unit.

14. The fuel cell stack device as claimed in claim 13, wherein the cathode unit comprises a noble metal.

15. The fuel cell stack device as claimed in claim 13 or 14, wherein the cathode unit comprises platinum, platinum alloy, or carbon-supported platinum alloy.

16. The fuel cell stack device as claimed in one of claims 13 to 15, further comprising a second bipolar plate disposed on the cathode unit.

17. The fuel cell stack device as claimed in one or more claims 13 to 16, further comprising a second bipolar plate having a third surface disposed on the cathode unit, a fourth surface opposite to the third surface, and a plurality of channels disposed on the third surface.

18. A manufacturing method for a membrane electrode assembly, comprising:
providing an anode unit comprising molybdenum oxide;
putting a ring pad on the anode unit;
pouring a resin solution comprising perfluorosulfonic acid in the ring pad; and
drying the resin solution comprising perfluorosulfonic acid on the anode unit to form a proton exchange membrane on a surface of the anode unit.

19. The manufacturing method for the membrane electrode assembly as claimed in claim 18, further comprising:
spraying a catalyst powder on the proton exchange membrane to form a cathode unit.

20. The manufacturing method for the membrane electrode assembly as claimed in claim 18 or 19, wherein the anode unit comprises a plurality of channels.

21. The manufacturing method for the membrane electrode assembly as claimed in one of claims 18 to 20, wherein the proton exchange membrane is a perfluorosulfonic acid proton exchange membrane.

22. A manufacturing method for a membrane electrode assembly, comprising:
putting a proton exchange membrane on the base of a pressing mold;
covering the proton exchange membrane with a powder comprising molybdenum oxide;
pressing a pressing element of the pressing mold on the powder and the proton exchange membrane with heat; and
forming an anode unit of the powder after the powder is solidified.

23. The manufacturing method for the membrane electrode assembly as claimed in claim 22, further comprising:
removing the proton exchange membrane and the anode unit from the pressing mold; and
spraying a catalyst powder comprising platinum, platinum alloy, or carbon-supported platinum alloy to the proton exchange membrane to form a cathode unit.

24. The manufacturing method for the membrane electrode assembly as claimed in claim 22 or 23, wherein the pressing element has a plurality of bumps, and in the step of pressing a pressing element of the pressing mold on the powder and the proton exchange membrane with heat, further comprising:
forming a plurality of channels in the powder.

25. The manufacturing method for the membrane electrode assembly as claimed in one of claims 22 to 24, wherein in the step of forming an anode unit of the powder after the powder is solidified, further comprising:
forming a plurality of grooves from the channels.

26. The manufacturing method for the membrane electrode assembly as claimed in one or more claims 22 to 25, wherein the proton exchange membrane is a perfluorosulfonic acid proton exchange membrane.

27. The manufacturing method for the membrane electrode assembly as claimed in one or more claims 22 to 26, wherein the proton exchange membrane is a polybenzimidazole proton exchange membrane and is a thermal tolerance.
